Europäisches Patentamt

European Patent Office

Office européen des brevets

(11) Numéro de publication: **0 283 626 B1**

# FASCICULE DE BREVET EUROPEEN

(45) Date de publication de fascicule du brevet:
**21.08.91**

(21) Numéro de dépôt: **87401211.5**

(22) Date de dépôt: **29.05.87**

(51) Int. Cl.⁵: **G01P 5/00**, G01P 21/02, G01P 7/00

(54) Procédé de détermination de la vitesse air d'un hélicoptère, système pour la mise en oeuvre de ce procédé de détermination et procédé d'étalonnage de ces procédé et système de détermination de la vitesse air.

(30) Priorité: **26.03.87 FR 8704258**

(43) Date de publication de la demande:
**28.09.88 Bulletin 88/39**

(45) Mention de la délivrance du brevet:
**21.08.91 Bulletin 91/34**

(84) Etats contractants désignés:
**BE DE FR GB IT NL SE**

(56) Documents cités:
**EP-A- 0 171 306**
**FR-A- 2 282 644**
**GB-A- 899 860**

(73) Titulaire: **SEXTANT Avionique**
**5/7 rue Jeanne Braconnier Parc Tertiaire**
**F-92368 Meudon la Forêt Cedex(FR)**

(72) Inventeur: **Mandle, Jacques**
**37, Rue des Amandiers**
**F-07500 Granges les Valence(FR)**
Inventeur: **Goudon, Jean-Claude**
**Lotissement Clairefontaine, 12, Montelier**
**F-26120 Chabeuil(FR)**

(74) Mandataire: **Bloch, Gérard et al**
**2, square de l'Avenue du Bois**
**F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne tout d'abord un procédé de détermination de la vitesse d'un hélicoptère par rapport à la masse d'air dans laquelle il se déplace, ainsi que le système de détermination de cette vitesse, qui est la vitesse propre de l'appareil. Au plan aérodynamique, c'est cette vitesse qui est importante, pour des raisons de sécurité surtout. Au plan navigation, c'est la vitesse par rapport au sol qui est à prendre en compte. Sans vent, c'est la même. En présence de vent il faut tenir compte du vent effectif et du vent traversier et procéder aux corrections nécessaires.

Un hélicoptère possède, dans son plan général, un axe longitudinal OX et un axe transversal OY. Les pales de l'hélicoptère formant le disque rotor, ou rotor principal de sustentation, sont articulées sur un moyeu s'étendant le long d'un axe OZ, souvent perpendiculaire aux deux axes OX et OY. Le déplacement de l'hélicoptère dans le plan OX, OY ainsi qu'en altitude suivant OZ s'effectue par variation du pas, ou du calage, des pales du rotor, c'est-à-dire par rotation des pales autour de leur pied, ou de leur articulation, de fixation au moyeu. L'angle de calage d'une pale est l'angle que fait la corde de portance nulle de son profil avec le plan de rotation.

La détermination du calage des pales s'effectue au moyen d'un plateau de commande de pas cyclique, ou plateau cyclique. Ce plateau, en fait double, peut être entraîné en translation suivant l'axe OZ par une première commande et en rotation autour des axes OX et OY par un manche de pilotage dit manche cyclique. Le plateau cyclique comporte donc deux plateaux, quasiment solidaires l'un de l'autre, le plateau supérieur étant toutefois monté solidaire en rotation du disque rotor, le plateau inférieur, à cet égard, étant fixe. Les pales sont reliées au plateau supérieur, chacune par une biellette de pas fixée à son bord d'attaque.

Par rotation ou inclinaison du plateau cyclique autour des axes OX et OY ou par translation de celui-ci le long de l'axe OZ, on provoque donc, par l'intermédiaire des biellettes de pas, la variation du calage des pales.

Par une action sur la première commande, dite manche collectif, le pilote entraîne le plateau cyclique en translation suivant l'axe OZ, ce qui provoque la variation du calage de toutes les pales simultanément et d'un même angle. C'est ainsi que le pilote fait varier la portance et donc l'altitude de l'appareil.

Par une action sur le manche cyclique, et par l'intermédiaire d'une liaison directe entre celui-ci et le plateau fixe du plateau cyclique, liaison par exemple du type mécanique ou hydraulique avec un montage à la cardan, le pilote incline le plateau cyclique autour de l'un ou l'autre des deux axes OX et OY ou des deux. Du côté où le plateau s'incline vers le bas, le bord des pales est tiré vers le bas, ce qui diminue leur portance. Les pales, mobiles autour de leur articulation, ont alors tendance à baisser. De l'autre côté, c'est l'inverse. C'est donc par action sur le manche cyclique que le pilote oriente dans l'espace la portance du disque rotor et qu'il commande donc les déplacements de son appareil dans le plan horizontal.

Aucun instrument ne fournit de façon précise la vitesse propre d'un hélicoptère dans tout le domaine de vol.

On connaît déjà la solution de l'anémomètre de la marque Badin, ou solution avion, qui fournit le module d'une vitesse en fonction de la différence entre la pression statique, ou atmosphérique, et la pression totale saisie par un tube de Pitot perpendiculaire au vent relatif. Mais la vitesse indiquée par un anémomètre Badin n'est égale à la vitesse propre que si la pression statique est égale à 1013 mbar en atmosphère standard, donc au voisinage du sol. Au fur et à mesure que l'hélicoptère s'élève en altitude, la pression statique diminue et la vitesse indiquée devient inférieure à la vitesse propre, de l'ordre de 1% par 600 pieds près du sol.En outre, en-deçà d'une certaine vitesse, environ 40 noeuds, la pression dynamique est trop faible et le rotor de sustentation engendre un flux aérodynamique entraînant une vitesse air apparente se rapprochant de la verticale et conduisant à des angles d'attaque aérodynamiques incompatibles avec l'utilisation de tubes de Pitot et perturbant également les mesures de pression statique.

On connait aussi la solution perfectionnant la précédente pour les basses vitesses et mettant en oeuvre un tube de Pitot monté, au bout d'un long mât, sur une girouette, mobile à la cardan autour de l'axe transversal OY et de la verticale du tube, pour que le tube de prise de pression totale s'oriente dans le sens du champ aérodynamique local. Cette solution est donc plus précise que la première, mais seulement aux basses vitesses, En outre, elle repose sur une installation fragile et vulnérable, compliquée, à cause du montage à la cardan, et donc peu fiable.

On notera ici que EP-A-204 856 enseigne un procédé de mesure de la vitesse horizontale pour les faibles vitesses.

On connait encore une troisième solution consistant à disposer, aux deux extrémités d'un bras monté rotatif sur un pied, deux venturis de prise de pressions - deux tubes de Kniel - dont la différence est une fonction sinusoïdale de l'azimut du bras. La valeur maximale de cette différence de pressions et l'azimut correspondant fournissent respectivement le module de la vitesse air et la direction du vecteur vitesse. Mais il s'agit ici aussi d'une solution lourde, fragile et d'une fiabilité toute relative.

On connaît également la solution offerte par une sonde, constituée de deux éleotrodes entre lesquelles circule un flux d'ions par effet Corona, située sur un mât au-dessus du moyeu du rotor principal. On peut ainsi obtenir les valeurs de la vitesse longitudinale et de la vitesse latérale en exploitant la mesure de la déviation du flux d'ions. Mais c'est une solution lourde et difficile à mettre en oeuvre en atmosphère humide.

Une cinquième solution, et il y en a d'autres encore, consiste à admettre que la vitesse air de l'hélicoptère selon l'un ou l'autre des axes OX, OY définis ci-dessus est proportionnelle à la différence entre le pas cyclique selon l'axe considéré et l'angle d'inclinaison, ou de rotation, de l'hélicoptère autour de l'autre des deux axes, à savoir l'angle de tangage, ou l'assiette longitudinale, autour de l'axe OY, et l'angle de roulis autour de l'axe OX. Pour mémoire, on notera que l'angle de rotation de l'hélicoptère autour de l'axe OZ est l'angle de lacet.

C'est cette cinquième solution qui est préconisée dans la demande de brevet français 2 282 644, publiée le 19 mars 1976, en référence aux passages de la page 9, lignes 1-8 et 33-35.

Le pas cyclique Px selon l'axe OX, est l'angle formé, dans le plan XOZ de symétrie du fuselage de l'hélicoptère, entre l'axe du moyeu du rotor et l'axe de contrôle, perpendiculaire au plateau cyclique, le pas cyclique Py étant l'angle correspondant dans le plan YOZ.

Cette cinquième solution est tout-à-fait satisfaisante dans les régimes de vol voisins du régime stationnaire; le système le mettant en oeuvre est en outre simple et rapide à étalonner. Toutefois, les performances de cette dernière solution se dégradent rapidement dès qu'on s'écarte du régime stationnaire, c'est-à-dire dès que les vitesses air selon les axes OX et OY augmentent.

En définitive, toutes les solutions proposées jusqu'ici pour la détermination de la vitesse propre d'un hélicoptère souffrent de limitations importantes de leurs domaines de bon fonctionnement, pour certaines, limitations aux hautes vitesses, pour d'autres, aux basses vitesses, pour d'autres encore, limitations dues à des perturbations liées aux mesures locales dans le flux perburbateur du rotor et à une fragilité excessive, voire même à des impossibilités pratiques liées à la nécessité de mesurer des paramètres non accessibles, comme l'efficacité d'un rotor, ou difficiles à mesurer avec une précision satisfaisante, comme la position du disque rotor, ou à la nécessité d'étalonnages complexes et coûteux.

Dans ces conditions, le but de la présente invention est d'offrir un procédé de détermination de la vitesse air d'un hélicoptère, performant dans tous les domaines de vol de l'aéronef et n'utilisant que des mesures d'informations primaires réalisables facilement et avec sécurité, et sans faire appel à des moyens externes au fuselage de l'hélicoptère.

La présente invention vise aussi à offrir un procédé efficace dans le domaine de vol des basses vitesses et particulièrement lors d'évolutions, le rendant compatible avec le système anémobarométrique traditionnel, de manière à fournir de façon continue et précise l'information de vitesse dans tout le domaine de vol de l'hélicoptère.

A cet effet, la présente invention concerne un procédé de détermination de la vitesse air d'un hélicoptère comprenant un rotor principal de sustentation et un dispositif anticouple, avec un axe longitudinal OX, un axe transversal OY et un axe du moyeu du rotor OZ, un plateau cyclique étant prévu pour faire varier le pas cyclique longitudinal Px, le pas cyclique transversal Py et le pas collectif Po du rotor principal, procédé dans lequel on détermine les deux composantes Vx et Vy de cette vitesse le long des axes OX et OY, respectivement, en fonction de la différence entre le pas cyclique (Px, Py) selon l'axe considéré (OX, OY) et l'angle d'inclinaison ($\theta x$, $\theta y$) de l'hélicoptère autour de l'autre axe (OY, OX), procédé caractérisé par le fait qu'on détermine Vx et Vy en résolvant les équations :

$$\begin{cases} V_x = k_1(P_x - \theta_x) + k_7 P_x{}^2 + k_8 P_x P_z + k_4 P_y + k_5 \theta_y \\ \qquad + k_2 P_z + k_9 \gamma_z + k_3 P_o + k_6 P_o{}^2 + k_{10} \\ V_y = k'_1(P_y - \theta_y) + k'_7 P_x{}^2 + k'_8 P_o P_z + k'_4 P_x + k'_5 \theta_x \\ \qquad + k'_2 P_z + k'_9 P_x \theta_y + k'_3 P_o + k'_6 P_o{}^2 + k'_{10} \end{cases}$$

dans lesquelles

. $P_z$ est le pas du dispositif anticouple,

. $\gamma_z$ est l'accélération verticale de l'hélicoptère suivant l'axe OZ,

. $k_1$-$k_{10}$ et $k'_1$-$k'_{10}$ sont des paramètres, fixes ou variables, dépendant du type de l'hélicoptère et déterminés par étalonnage.

$P_o$, le pas collectif du disque rotor principal, commandé par le manche collectif de l'hélicoptère, participe avec $P_x$ et $P_y$ à la détermination du calage des pales (voir Helicopter Dynamics, A.R.S. Bramwell, Edward Arnold, 1976).

Il faut ici d'ores et déjà noter que le procédé de l'invention perfectionne le procédé du brevet français 2 282 644 dans la mesure où le facteur multiplicateur des termes $(P_x - \theta_x)$ et $(P_y - \theta_y)$ n'est plus nécessairement une constante, d'une part, et où d'autres termes sont pris en compte pour la détermination des composantes de la vitesse, d'autre part. Il se distingue également de celui de EP-A-280 599 publié le 31.08.1988 et n'appartenant donc à l'état de la teohnique qu'au titre de l'article 54.3 CBE.

Dans une mise en oeuvre intéressante du procédé de l'invention, les paramètres $k_1$ et $k'_1$ sont donnés par les relations :

$$k_1 = \cfrac{\Omega R}{\frac{4}{3} P_o + \frac{8\omega}{5,7} + \cfrac{C_d}{\omega}}$$

$$k'_1 = -\cfrac{1}{\frac{4}{3} P_o + \frac{8\omega}{5,7} + \cfrac{C_d}{\omega}}$$

dans lesquelles

. $\Omega$ est la vitesse de rotation du rotor principal,

. R est le rayon du rotor principal,

. $\omega$ est le poids W de l'hélicoptère selon la verticale, réduit par le terme $\rho n c \, \Omega^2 R^3$,

. $C_d$ est la trainée moyenne des pales,

. $\rho$ est la densité de l'air au lieu où se trouve l'hélicoptère,

. n est le nombre de pales du rotor principal,

. c est la corde des pales du rotor principal,

l'axe OZ du moyeu du rotor étant perpendiculaire aux axes OX, OY.

Dans ce cas, il peut être avantageux de considérer comme nuls les paramètres $k_2$-$k_{10}$ et $k'_2$-$k'_9$ et de prendre $k'_{10}$ comme donné par la relation

4

$$k'_{10} = \frac{k\ tr\ \cos \varphi - \sin \theta}{\frac{4}{3}\ P_o + \frac{8\omega}{5,7} + \frac{Cd}{\omega}}y$$

dans laquelle

. $k$ est une constante dépendant du type de l'hélicoptère,

. $tr$ est la poussée réduite du dispositif anticouple, réduite par le terme $\rho nc\Omega^2\ R^3$ ,

. $\psi$ est l'angle de roulis de l'hélicoptère.

Dans la mise en oeuvre préférée du procédé de l'invention, les paramètres $k_1$-$k_{10}$ et $k'_1$-$k'_{10}$ sont considérés comme des constantes.

La présente invention concerne également le système pour la mise en oeuvre du procédé de l'invention pour la détermination de la vitesse air d'un hélicoptère comprenant un rotor principal de sustentation et un dispositif anticouple, avec un axe longitudinal OX, un axe transversal OY et un axe du moyeu du rotor OZ, un plateau cyclique étant prévu pour faire varier le pas cyclique longitudinal Px, le pas cyclique transversal Py et le pas collectif Po du rotor principal, système caractérisé par le fait qu'il comprend un accéléromètre fournissant l'accélération verticale $\gamma Z$, suivant l'axe OZ, de l'hélicoptère, des inclinomètres fournissant les angles d'inclinaison $\theta x$ et $\theta y$ de l'hélicoptère autour des axes OY et OX, respectivement, des capteurs de déplacement de la commande des pas cycliques longitudinal Px et transversal Py, un capteur de déplacement de la commande du dispositif anticouple Pz, un capteur de déplacement de la commande de pas collectif Po du rotor principal, un dispositif d'étalonnage du système agencé pour déterminer les coefficients $k_1$-$k_{10}$ et $k'_1$-$k'_{10}$ des relations fournissant les valeurs des composantes longitudinales Vx et transversale Vy de la vitesse air de l'hélicoptère, des moyens pour mémoriser ces coefficients, et un calculateur agencé pour acquérir les paramètres $\gamma Z$, $\theta x$, $\theta y$, Px, Py, Pz et Po et, à l'aide desdits coefficients, mettre en oeuvre les dites relations fournissant Vx et Vy.

Le système de l'invention peut comprendre également un variomètre fournissant la vitesse verticale Vz de l'hélicoptère et un dispositif de détermination de la vitesse sol de l'hélicoptère.

Dans ce cas, le système comprend encore avantageusement un anémomètre classique et un dispositif d'hybridation agencé pour sélectionner l'une, ou l'autre, ou une combinaison des deux valeurs de la vitesse air fournies par le calculateur et l'anémomètre, respectivement.

Incidemment, le système de l'invention peut également comprendre des capteurs des vitesses de roulis et de tangage de l'hélicoptère, de la densité de l'air et de la vitesse de rotation du rotor principal de l'hélicoptère.

La présente invention concerne enfin le procédé d'étalonnage d'un système de détermination de la vitesse air V d'un hélicoptère de la forme linéaire

$$V = \sum_{i=1}^{i=n} a_i\ x_i\ ,$$

les xi étant n variables, représentatives de différents paramètres sensibilisants de l'hélicoptère, affectées respectivement des n coefficients multiplicateurs $a_i$, procédé dans lequel on détermine les n coefficients $a_i$ en résolvant un système de N équations linéaires à n inconnues de la forme

$$V = \sum_{i=1}^{n} a_i\ x_i\ ,$$

N étant le nombre de configurations principales de vol de l'hélicoptère dans lesquelles on mesure lesdits paramètres sensibilisants de l'hélicoptère dans le repère de l'hélicoptère et on calcule les valeurs des n

dites variables $x_i$, procédé d'étalonnage caractérisé par le fait qu'on détermine l'attitude et le cap vrais de l'hélicoptère, on dédouble chaque configuration de vol principale en une paire de deux configurations élémentaires voisines l'une de l'autre pour admettre que le vent est le même dans ces deux configurations élémentaires, et, pour chaque paire de configurations élémentaires, on mesure, dans les deux configurations élémentaires, la vitesse sol de l'hélicoptère, dont les variations sont assimilées à celles de sa vitesse air, ainsi que les paramètres sensibilisants de l'hélicoptère, qu'on transpose du repère de l'hélicoptère dans le repère terrestre, et on prend pour équation du système de N équations à résoudre celle obtenue par soustraction membre à membre des deux équations relatives aux deux configurations élémentaires.

Grâce au procédé d'étalonnage de l'invention, il n'est nécessaire de faire usage que d'une référence embarquée de la vitesse sol. On peut donc parler d'un procédé d'auto-étalonnage.

Avantageusement, la résolution du système de N équations à n inconnues s'effectue par la méthode des moindres carrés.

L'invention sera mieux comprise à l'aide de la description suivante du procédé de détermination de la vitesse air d'un hélicoptère, du système pour la mise en oeuvre du procédé de détermination et du procédé d'étalonnage du système ou du procédé de détermination de la vitesse, en référence aux dessins annexés, sur lesquels :

- la figure 1 est un diagramme montrant les axes de référence OX et OY de l'hélicoptère dans le plan horizontal;
- la figure 2 est un diagramme montrant les axes de référence OX et OZ de l'hélicoptère dans le plan vertical;
- la figure 3 est un diagramme illustrant la décomposition des forces agissant sur l'hélicoptère;
- la figure 4 est un organigramme de calcul de la vitesse air longitudinale de l'hélicoptère;
- la figure 5 est un organigramme de calcul de la vitesse air latérale de l'hélicoptère;
- la figure 6 est un organigramme illustrant l'étalonnage classique du procédé des figures 4 et 5;
- la figure 7 est un organigramme illustrant l'auto-étalonnage de l'invention;

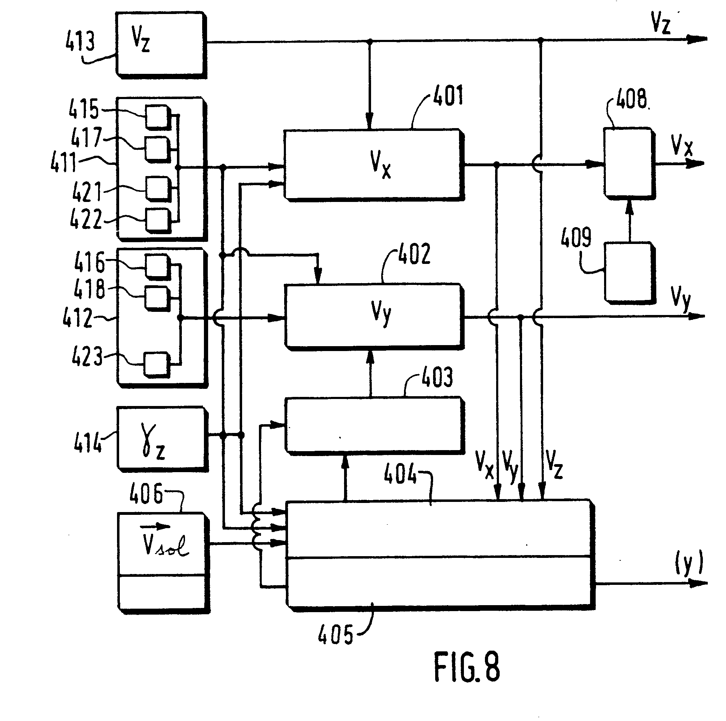

- la figure 8 est un exemple de réalisation schématique du système de l'invention, et
- la figure 9 est un schéma d'un niveau pendulaire.

Le procédé de détermination de la vitesse air d'un hélicoptère, de l'invention, est fondé, à l'origine, sur les lois classiques de la mécanique du vol des hélicoptères. L'expérience acquise a conduit à la formulation d'équations nouvelles, celles de l'invention, suffisamment représentatives du vol d'hélicoptère, ainsi qu'à une expression simplifiée de celles-ci, adaptée à l'utilisation pratique d'un dispositif de mesure des vitesses air longitudinale et transversale des hélicoptères. L'analyse mathématique permet d'établir des équations reliant les deux composantes Vx et Vy de la vitesse air de l'hélicoptère aux paramètres de commande et d'attitude de l'hélicoptère. Suivant les lois de la mécanique du vol, il faut décomposer vectoriellement les forces s'appliquant a l'hélicoptère : portance du rotor principal, poids de l'aéronef, poussée du dispositif anti-couple et trainée aérodynamique.

On détermine ainsi deux relations donnant, chacune, les composantes Vx et Vy de la vitesse de l'hélicoptère par rapport à l'air en fonction des données cinématiques de commande et d'attitude. Ces données sont facilement mesurables sur un hélicoptère et ne nécessitent pas, en particulier, de mesures d'inclinaison du disque rotor, difficilement accessible.

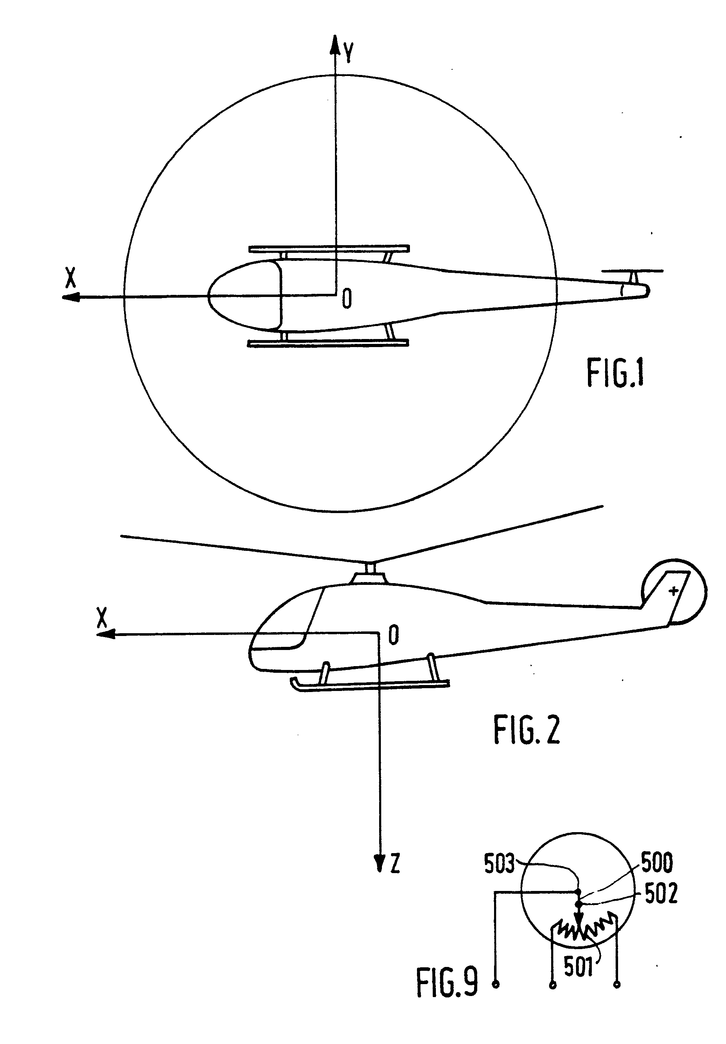

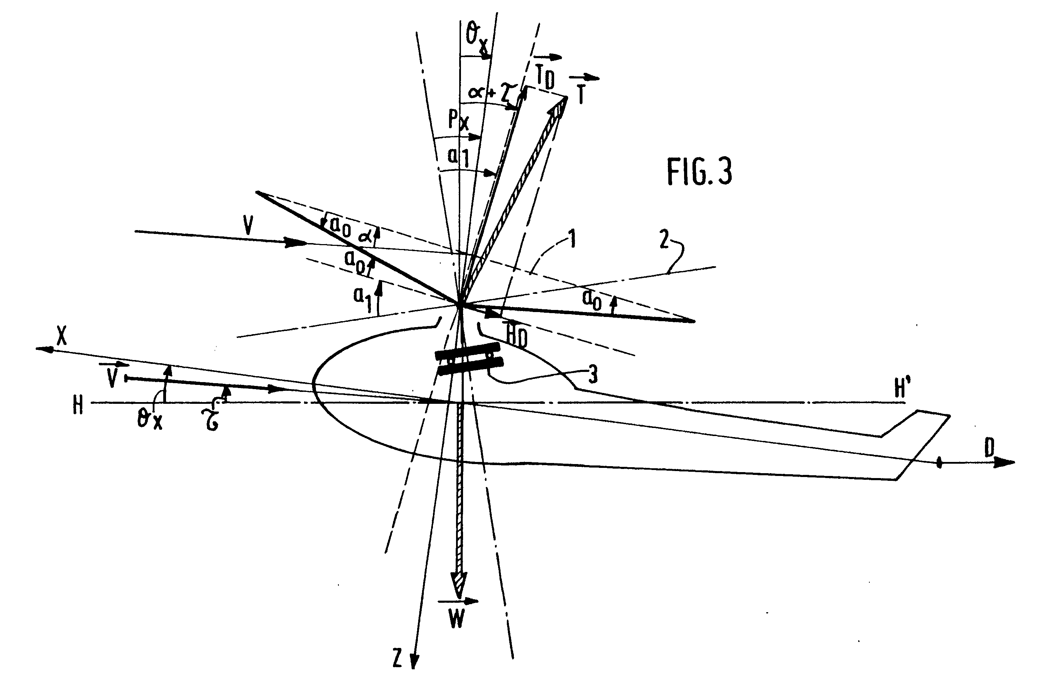

Les figures 1 et 2 illustrent les axes de référence OX, OY, OZ de l'aéronef, perpendiculaires deux à deux entre eux, l'axe OZ étant l'axe du moyeu du rotor principal de l'aéronef. La figure 3 illustre la décomposition des forces, dans le plan de symétrie XOZ du fuselage de l'hélicoptère agissant sur l'hélicoptère, en vol de montée, suivant une pente $\tau$ , l'angle $\tau$ étant formé entre le vecteur vitesse $\vec{V}$ de l'hélicoptère et l'horizontale HH', pour la détermination de la composante Vx. Il s'agit de la traction du rotor $\vec{T}$ , du poids $\vec{W}$ selon la verticale et de la trainée du fuselage $\vec{D}$ suivant le vecteur vitesse $\vec{V}$ . La force de traction du rotor $\vec{T}$ peut être décomposée, comme tout vecteur, selon l'axe normal au plan 1 des extrémités de pales

$$(\vec{T_D})$$

et dans ce plan

$$(\vec{H_D}) .$$

Ce plan fait dans l'espace un angle $a_1$ avec le plan 2 de contrôle, adopté comme plan de référence, parallèle au plateau cyclique 3 lui-même commandé directement par le manche de pas cyclique actionné par le pilote et le cas échéant complété par l'action d'un pilote automatique ou de tout autre système annexe. Ce même plan du rotor 1 fait un angle $\alpha$ avec le vecteur vitesse air de l'aéronef $\overline{V}$.

La loi d'inertie exprime que la somme vectorielle des forces appliquées à un mobile en mouvement rectiligne à vitesse constante est nulle. Cette loi projetée sur la verticale et le plan horizontal, en notant que le plan rotor fait un angle $\alpha + \tau$ par rapport à l'horizontale, donne les relations

$$T_d \cos (\alpha + \tau) - H_d \sin (\alpha + \tau) = W + D \sin \tau$$
$$T_d \sin (\alpha + \tau) + H_d \cos (\alpha + \tau) = D \cos \tau$$

dans lesquelles $T_D$ est la projection de la traction du rotor T sur la normale au plan rotor 1 et $H_D$ est la projection de T dans ce plan 1.

En faisant les approximations liées aux faibles valeurs des angles considérés, et tous calculs faits, on en tire la relation :

$$\alpha + \tau = - (1/2 \mu_x^2 \, d \cos \tau + h_D) / t_D, \qquad (1)$$

avec, symboliquement,

$$\left\{ \begin{array}{l} \mu_x = \dfrac{V_x}{\Omega R}, \\[2em] d = \dfrac{D}{\dfrac{\rho V^2}{2} ncR} \end{array} \right.$$

$\Omega$ étant la vitesse de rotation du rotor, R le rayon du rotor, $\rho$ la densité de l'air au lieu où se trouve l'hélicoptère, n le nombre de pales du rotor et c leur corde, $h_D$ et $t_D$ étant les valeurs de $H_D$ et $T_D$ divisés par le terme $\rho nc \, \Omega^2 R^3$.

De plus, avec les approximations suivantes :

$t_D = \omega$, $\omega$ étant le poids W réduit par le terme $\rho nc \, \Omega^2 R^3$,

$h_d = 1/4 \, Cd \, \mu_x$, Cd étant la trainée moyenne des pales, la relation (1) devient :

$$\alpha + \tau = (1/2 \mu_x^2 \, d \cos \tau + 1/4 \mu_x \, Cd) / \omega \qquad (3)$$

En référence à la figure 3, il existe la relation angulaire simple

$$\alpha + P_x - a_1 - \theta_x + \tau = 0 \qquad (4)$$

En effet, $\theta_x + a_1 - P_x = \alpha + \tau$, l'angle formé entre la perpendiculaire au plan rotor 1 et la verticale étant égal à l'angle formé entre le plan rotor 1 et l'horizontale.

Enfin, l'analyse complexe du mouvement des pales dans l'espace, qui dépasse le cadre de cette présentation, montre que :

$$a_1 = 2 \mu_x \left( \frac{4\omega}{5,7} + \frac{2}{3} P_0 \right) \qquad (5)$$

où l'angle $P_0$ est le pas collectif.

A partir des équations (3), (4) et (5), on obtient l'équation suivante (6) du deuxième degré en $\mu_x$

7

$$\frac{1}{2} \ \frac{d}{\omega} \ \mu_x^2 \ + \ (\frac{4}{3} \ Po \ + \ \frac{8 \ \omega}{5,7} + \ \frac{1}{4} \ \frac{Cd}{\omega}) \ \mu_x \ + \ (\Theta_x - Px) = \ 0 \quad (6)$$

qui peut se résoudre numériquement et donner une valeur de $\mu_x$ donc Vx.

Par expérience, la vitesse Vx reste faible comparée à la vitesse périphérique du rotor, donc $\mu_x$ est petit et l'équation (6) peut se simplifier au premier degré et se résoudre en :

$$Vx \ = \ \frac{\Omega \ R(Px - \Theta x)}{\frac{4}{3} \ P_0 \ + \ \frac{8 \ \omega}{5,7} \ + \ \frac{1}{4} \ \frac{Cd}{\omega}} \quad (7)$$

Cette relation est une amélioration importante par rapport aux procédés antérieurs, parce que l'influence du poids de l'hélicoptère, du pas collectif et de la vitesse de rotation du rotor y sont explicitées donc prises en compte. Il s'agit de paramètres aisément mesurables.

Le calcul de la composante de vitesse par rapport à l'air selon l'axe transversal Vy se fait de manière similaire, en prenant toutefois en compte la poussée latérale du dispositif anti-couple qui, généralement se trouve être lui-même un rotor. Cette poussée équilibre le couple de rotation du rotor principal quel que soit le dispositif.

A titre d'exemple, pour un dispositif anticouple de type rotor, la poussée est sensiblement proportionnelle au pas Pz de ce rotor, à une constante près.

Un calcul analogue au précédent conduit à l'expression

$$Vy \ = \ \frac{-(Py \ - \ \Theta y \ + \ \sin \Theta y \ - \ k \ tr \ \cos \varphi)}{\frac{4}{3} \ Po \ + \ \frac{8 \ \omega}{5,7} \ + \ \frac{1}{4} \ \frac{Cd}{\omega}} \quad (8)$$

où, tr est la poussée réduite du système anticouple, k une constante déterminée pour chaque type d'hélicoptère, et $\psi$ l'angle de roulis de l'hélicoptère.

Ces relations (7) et (8) peuvent être encore améliorées, pour une élaboration plus précise des vitesses Vx et Vy, par :
- la prise en compte de l'accélération normale de l'hélipcoptère, en remplaçant W par W $n_z$, $n_z$ étant le facteur de charge normal, et
- la prise en compte des vitesses de rotation en tangage et roulis.

L'utilisation de ces paramètres nouveaux permet de rendre l'élaboration des vitesses Vx et Vy exactes pour des régimes de vol non stabilisés, par exemple en accélération et en virage, et conduisent à des dispositifs ayant des performances bien meilleures que celles de l'art antérieur.

Soit donc :

Vx = jx + jy . jz    (9)
Vy = jy + jx . jz    (10)

équations dans lesquelles jx, jy et jz s'expriment par les relations :

$$jx = \frac{\ell_1 + \ell_2\, \theta_x + \ell_3\, P_x + \ell_4 p + \ell_5 q + \ell_6\, P_z}{1 + \ell_7\, P_o + \ell_8\, M/\rho} \qquad (11a)$$

$$jy = \frac{\ell'_1 + \ell'_2\, \theta_y + \ell'_3\, P_y + \ell'_4 p + \ell'_5 q + \ell'_6\, P_z}{1 + \ell'_7\, P_o + \ell'_8\, M/\rho} \qquad (11b)$$

$$jz = \frac{\ell''_1}{1 + \ell''_2\, P_o + \ell''_3\, M/\rho} \qquad (11c)$$

relations dans lesquelles $\ell_1 - \ell_8$, $\ell'_1 - \ell'_8$, $\ell''_1 - \ell''_3$ sont des paramètres dépendant du type de l'hélicoptère, M la masse de l'hélicoptère, p et q les vitesses angulaires respectivement de roulis et de tangage, Pz la commande du dispositif anti-couple, c'est-à-dire le pas s'il s'agit d'un rotor, et $\rho$ la densité de l'air à l'endroit où se trouve l'hélicoptère.

Cette formulation fournit d'excellents résultats mais représente un volume de calcul important. Une diminution du volume de calcul est obtenue par simplification des formules (9) et (10).

Cette formulation simplifiée et pratique n'utilise que des paramètres directement accessibles par des procédés bien connus sur hélicoptère:

$$Vx = k_1 (P_x - \theta x) + k_2\, Pz + k_3\, Po + k_4 Py + k_5\, \theta_y + k_6\, Po^2 + k_7\, P_x 2 + k_8\, Pz\, Px + k_9\, \gamma z + k_{10} \qquad (13)$$

$$Vy = k'_1 (Py - \theta y) + k'_2\, Pz + k'_3 Po + k'_4 Px + k'_5 \theta x + k'_6 Po^2 + k'_7\, Px^2 + k'_8 Po\, Pz + k'_9\, Px\, \theta y + k'_{10} \qquad (14)$$

On notera qu'on tire les équations (7) et (8) des équations (13) et (14) en prenant comme valeur des paramètres $k_2 - k_{10}$ et $k'_2 - k'_9$ une valeur nulle, comme paramètre $k_1$

$$k_1 = \frac{\Omega\, R}{\frac{4}{3}\, Po + \frac{8\,\omega}{5,7} + \frac{Cd}{\omega}}$$

comme paramètre $k'_1$

$$k'_1 = \frac{-1}{\frac{4}{3}\, Po + \frac{8\,\omega}{5,7} + \frac{Cd}{\omega}}$$

et comme paramètre $k'_{10}$

$$k'_{10} = \frac{k\ tr\ cos\,\varphi - sin\,\theta y}{\frac{4}{3}\, Po + \frac{8\,\omega}{5,7} + \frac{Cd}{\omega}}$$

Suivant le type d'hélicoptère et les performances recherchées, d'autres paramètres peuvent être pris en compte. Ces paramètres peuvent être, notamment :
- la vitesse verticale Vz,
- les vitesses de roulis et de tangage p et q,
- la masse réduite $M/\rho$,
- la vitesse de rotation du rotor principal $\Omega$,

Vz, p et q sont alors introduits dans les seconds membres des équations (13) et (14) sous la forme :

$k_{11}$ Vz + $k_{12}$p + $k_{13}$q et $k'_{11}$Vz + $k'_{12}$p + $k'_{13}$q.

M/$\rho$ est introduit dans ces mêmes équations en remplaçant $k_1$ et $k'_1$ respectivement par :

$k_1 = h_1$ M/$\rho$ + $h_2$

$k'_1 = h'_1$ M/$\rho$ + $h'_2$

les coefficients $h_1$, $h_2$, $k'_1$, $k'_2$ étant des constantes pour un hélicoptère donné.

La vitesse de rotation du rotor principal est introduite sous la forme :

$k_{14} \Omega + k_{15} \Omega^2$ et $k'_{14} \Omega + k'_{15} \Omega^2$ ajoutée

respectivement au deuxième membre des équations (13) et (14).

Ce perfectionnement n'est vraiment nécessaire que dans le cas où le rotor principal de l'hélicoptère soit ne possède pas de système de régulation de vitesse de rotation, soit possède plusieurs vitesses de rotation commandées par ailleurs.

Il serait possible d'ajouter aux deuxièmes membres des équations (13) ou (14) des termes élevés au carré, voire à une puissance entière pour les termes $\theta$x, Px, Pz, Py, $\theta$y et $\theta$z, voire des produits de ces paramètres, par exemple ($\gamma$z Po), multipliés par un coefficient constant et déterminé pour chaque type d'hélicoptère.

Une autre amélioration de l'invention consiste en la commutation d'un jeu de paramètres à un autre, en fonction des données de vol.

Le fait, que les équations (13) et (14) ne soient exprimées que par une combinaison linéaire des paramètres d'entrée et de puissances de ces paramètres et de leur produit, conduit à un objet complémentaire de l'invention en l'occurrence la possibilité d'auto-étalonnage du système la mettant en oeuvre.

Le dispositif mettant en oeuvre le procédé décrit ci-dessus utilise une unité de calcul composée classiquement d'une unité arithmétique effectuant des opérations élémentaires telles qu'additions et multiplications et toutes opérations nécessaires au fonctionnement du calculateur.

De plus, cette unité est capable d'acquérir des informations d'entrée fournies par des capteurs classiques tels que potentiomètres, résolvers.

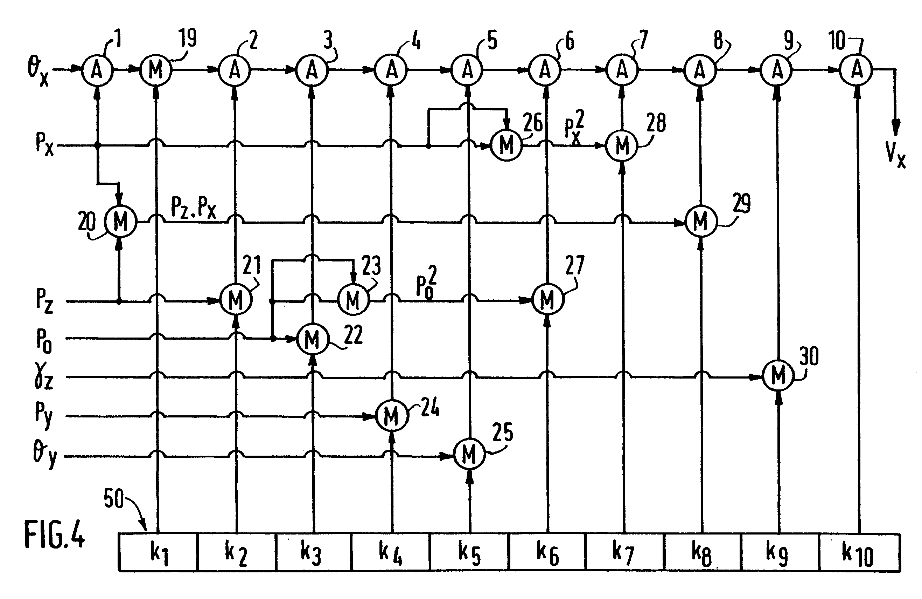

L'organigramme de calcul de Vx est présenté sur la figure 4.

Les paramètres d'entrée sont :

- $\theta$x, venant d'un inclinomètre ou d'un boîtier accélérométrique classique recevant les trois accélérations de l'hélicoptère $\gamma$x, $\gamma$y et $\gamma$z provenant de trois boîtiers accélérométriques dont les axes sont respectivement les axes OX, OY, OZ de l'hélicoptère, $\theta$x étant élaboré par l'unité de calcul du boîtier, suivant les équations suivantes :

$$\theta x = Arctg \frac{\gamma x}{\sqrt{\gamma y^2 + \gamma z^2}} \simeq Arcsin \frac{\gamma x}{\sqrt{\gamma x^2 + \gamma y^2 + \gamma z^2}} \simeq \frac{\gamma x}{\gamma z},$$

- $\theta$y, venant d'un autre inclinomètre ou du boîtier accélérométrique, et étant élaboré suivant les équations suivantes

$$\theta y = Arctg \frac{\gamma y}{\sqrt{\gamma x^2 + \gamma z^2}} \simeq Arctg \frac{\gamma y}{\gamma z} \simeq \frac{\gamma y}{\gamma z},$$

les inclinomètres fournissant $\theta$ x et $\theta$ y étant situés dans deux plans orthogonaux servant de référence de mesure,

- Px, provenant d'un capteur potentiométrique de déplacement de la commande de pas cyclique longitudinal,
- Py, provenant d'un capteur potentiométrique de déplacement de la commande de pas cyclique transversal,
- Pz, provenant d'un capteur potentiométrique de déplacement de la commande du dispositif anticcouple,
- Po, provenant d'un capteur potentiométrique de déplacement de la commande du pas collectif général du rotor principal,

En référence à la figure 9, représentant le schéma d'un niveau pendulaire,ou d'un inclinomètre, pouvant fournir $\theta x$ et $\theta y$, et pour prendre l'exemple de $\theta x$ une flèche 500, portant une masse 502, tourne librement autour d'un point 503, sensiblement perpendiculairement au plan XOZ en se plaçant dans le champ de la pesanteur; la pointe de la flèche 500 frotte sur un rhéostat 501, qui fournit l'angle $\theta x$.

Classiquement, le calculateur acquiert la valeur de ces paramètres au début d'un cycle de calcul et les transforme classiquement en un valeur numérique. Dans ce qui suit le nom du paramètre représente sa valeur numérique. Les coefficients $k_1$ à $k_{10}$ sont mémorisés à l'avance dans une mémoire 50 (Figure 4).

Le calculateur prend $\theta x$, utilise un additionneur 1, de gain -1, pour la soustraire de Px, puis multiplie, à l'aide du multiplieur 19, le résultat par $k_1$ qu'il extrait de la mémoire 50. Il additionne à l'aide de l'additionneur 2 le résultat à $P_z$, multiplié par $k_2$, à l'aide du multiplieur 21, $k_2$ provenant de la mémoire 50; le résultat est additionné à l'aide de l'additionneur 3 à Po, multiplié par $k_3$, provenant de la mémoire 50; le résultat est additionné à l'aide de l'additionneur 4 à Py, multiplié par $k_4$, provenant de la mémoire 50, dans le multiplieur 24; le résultat est additionné, à l'aide de l'additionneur 5, à $\theta y$ multiplié par $k_5$, provenant de la mémoire 50, dans le multiplieur 25. A ce résultat, on additionne, à l'aide de l'additionneur 6, Po multiplié une fois par lui-même à l'aide du multiplieur 23 et multiplié par $k_6$, provenant de la mémoire 50, à l'aide du multiplieur 27. A ce résultat provenant de l'additionneur 6, on additionne, à l'aide de l'additionneur 7, Px, multiplié une fois par lui-même à l'aide du multiplieur 26 et multiplié par $k_7$ issu de la mémoire 50 à l'aide du multiplieur 28.

Par ailleurs, Px et Pz sont multipliés entre eux par le multiplieur 20 et par $k_8$, issu de la mémoire 50, à l'aide du multiplieur 29, ce qui fournit un résultat qui est additionné au résultat de l'additionneur 7 à l'aide de l'additionneur 8. A ce résultat, le calculateur ajoute, à l'aide de l'additionneur 9, $\gamma z$ multiplié par $k_9$, issu de la mémoire 50, à l'aide du multiplieur 30. Enfin, à ce résultat, le calculateur ajoute $k_{10}$, issu de la mémoire 50, à l'aide de l'additionneur 10. Ce résultat final est la valeur de la vitesse longitudinale Vx.

Le calculateur fournit cette valeur et recommence alors un cycle de calcul de Vx.

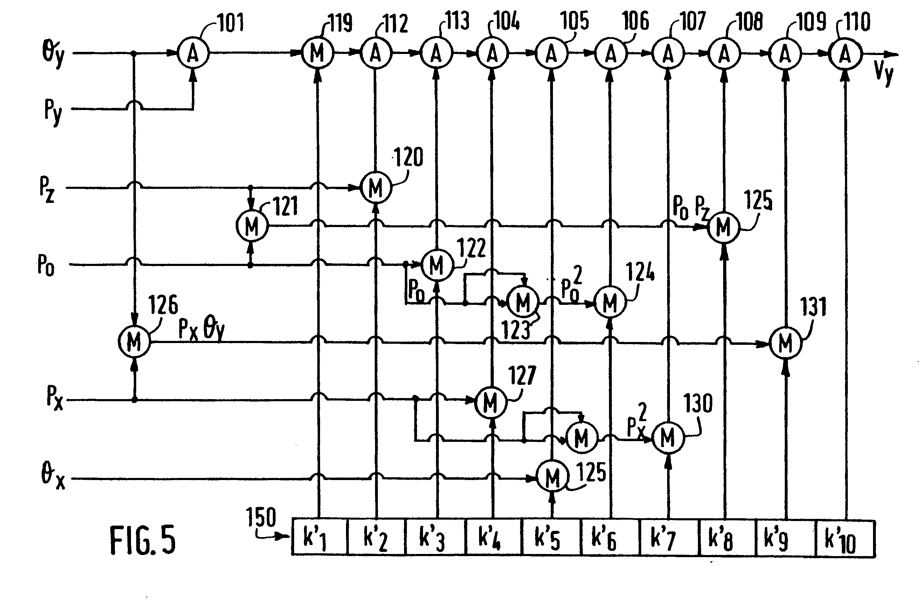

L'organigramme de calcul de Vy, présenté sur la figure 5, fait appel à des paramètres définis plus haut.

Le calculateur prend $\theta y$ et Py, les soustrait à l'aide de l'additionneur 101 de gain -1, multiplie le résultat par $k'_1$, issu de la mémoire 150, à l'aide du multiplieur 119. A ce résultat, il ajoute, à l'aide de l'additionneur 102, Pz multiplié, à l'aide du multiplieur 120, par $k'_2$, issu de la mémoire 150. A ce résultat, il ajoute à l'aide de l'additionneur 103, Po multiplié, à l'aide du multiplieur 122, par $k'_3$ issu de la mémoire 150. A ce résultat, il ajoute, à l'aide de l'additionneur 104, Px multiplié, à l'aide du multiplieur 127, par $k'_4$, issu de la mémoire 150. A ce résultat, il ajoute à l'aide de l'additionneur 105, $\theta x$ multiplié, à l'aide du multiplieur 128, par $k'_5$ issu de la mémoire 150. A ce nouveau résultat, il ajoute à l'aide de l'additionneur 106, Po multiplié une fois par lui-même, à l'aide du multiplieur 123, et par $k'_6$ issu de la mémoire 150, à l'aide du multiplieur 124. A ce résultat, il ajoute à l'aide de l'additionneur 107, Px multiplié une fois par lui-même, à l'aide du multiplieur 129, et par $k'_7$, issu de la mémoire 150, à l'aide du multiplieur 130. A ce résultat il ajoute à l'aide de l'additionneur 108 le produit de Po et Pz, réalisé par le multiplieur 121, produit lui-même multiplié par $k'_8$ issu de la mémoire 150, à l'aide du multiplieur 125. A ce résultat, il ajoute, à l'aide de l'additionneur 109, le produit de Px et $\theta Y$, réalisé à l'aide du multiplieur 126, lui-même multiplié par $k'_9$ issu de la mémoire 150, à l'aide du multiplieur 131. Finalement, le calculateur ajoute au résultat précédent $k'_{10}$ issu de la mémoire 150, à l'aide de l'additionneur 110. Ce résultat final est la valeur de la vitesse Vy.

Le calculateur fournit cette valeur et recommence un cycle de calcul de Vy.

La présente invention concerne également la détermination des différents coefficients $k_1$-$k_{10}$ et $k'_1$-$k'_{10}$, pour le calcul des vitesses Vx et Vy, c'est-à-dire l'étalonnage de ces fonctions ou la calibration du système de calcul.

De façon classique, l'étalonnage, d'une fonction Y de variables xi, selon l'équation

$$Y = \sum_{i=1}^{i=n} a_i x_i \ ,$$

c'est-à-dire la détermination des coefficients $a_i$, s'effectue en mesurant Y dans N configurations, avec $N > \eta$,

ainsi que les variables xi correspondantes, pour obtenir un nuage de points dans un espace à n dimensions et, par la méthode des moindres carrés, faire passer une courbe par ces points.

Dans le cas d'espèce, un des moyens classiques d'effectuer la calibration du système est de mesurer la vitesse air par un autre moyen, soit par un autre anémomètre, soit par la connaissance du vent et de la vitesse sol.

Pour chaque cas de vol d'étalonnage, on dispose de
- la valeur de la vitesse air de référence,
- la valeur des différents paramètres sensibilisants (pas, assiettes, masse ...) acquise sur l'hélicoptère.

On effectue alors un certain nombre de cas de vol permettant de balayer le domaine de vol de l'hélicoptère considéré afin d'avoir suffisamment de données pour identifier les coefficients.

Dans le cas du modèle présenté [équations (13) et (14)], on résoud donc deux systèmes de N équations à 10 inconnues par une méthode des moindres carrés, N étant le nombre de points de vols sensibilisants.

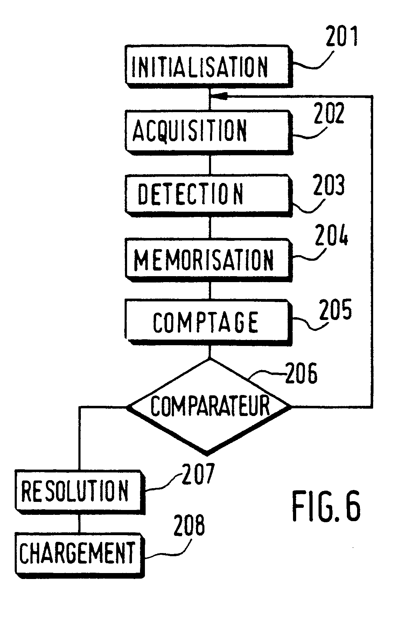

L'organigramme d'un tel calcul est présenté schématiquement sur la figure 6.

Un dispositif d'initialisation 201 est commandé avant le vol d'étalonnage, soit par le pilote, soit par un insert sur le calculateur. Le pilote effectue le vol qui l'amène à différentes valeurs de vitesse air, suffisamment stabilisée et ce, dans tout le domaine de vol de l'hélicoptère.

Le calculateur acquiert à l'aide d'un dispositif classique d'acquisition 202 les paramètres mesurés sur l'hélicoptère ($\theta x$, Px, Pz, Po, $\gamma z$, Py, $\theta y$) et les valeurs Vx et Vy fournies par la référence de vitesse air. Puis, le calculateur s'assure, à l'aide d'un dispositif classique de détection d'écart 203, que le jeu des valeurs des paramètres ainsi acquis est suffisamment différent de celui acquis précédemment pour que le nuage soit le plus parfait possible. Il incrémente alors un dispositif de comptage 205. Si la valeur de ce compteur est inférieure à une valeur N donnée au départ (nécessairement supérieur à 10) dans un comparateur 206, le calculateur continue à acquérir des paramètres. Sinon, le calculateur, pour Vx et Vy, effectue la résolution des 2 fois N équations à 2 fois 10 inconnues que sont les coefficients $k_1$ à $k_{10}$ et $k'_1$ à $k'_{10}$ à l'aide d'un dispositif classique 207 de résolution d'équations linéaires au sens des moindres carrés. Cette résolution d'équations étant faite, les jeux de coefficients $k_1$ à $k_{10}$ sont chargés dans les mémoires 50 et 150 à l'aide d'une procédure classique de chargement 208.

Cette méthode d'étalonnage présente toutefois des inconvénients. Elle nécessite en effet des moyens lourds au sol ou embarqués et est opérationnellement difficile à utiliser. A titre d'exemple, un anémomètre laser pèse plus de 50 kg.

Dans ces conditions, il est proposé, en variante, un autre procédé d'étalonnage, basé sur l'hypothèse selon laquelle, entre deux configurations de vol stabilisé successives dans le temps, et donc voisines, les variations du vecteur vitesse air, dans le repère terrestre, sont égales aux variations du vecteur vitesse sol. En d'autres termes, il est supposé que le vecteur vent reste constant entre les deux passes considérées, mais, bien entendu, pas pendant tout le vol. Par ailleurs, il est fait usage des données d'attitude vraie et de cap vrai d'une référence embarquée du vecteur vitesse sol, tous les calculs étant effectués dans le repère terrestre.

Ainsi, et selon ce procédé, qui permet de s'affranchir du vecteur vent, la détermination des coefficients k et k' ne s'effectue qu'à l'aide de la référence embarquée du vecteur vitesse sol : on peut donc parler d'un procédé d'auto-étalonnage, ou d'auto-calibration.

Comme référence embarquée, on peut prendre un système radar doppler et une centrale de verticale, ou une centrale à inertie, par exemple.

Vsx, Vsy, Vsz      étant les vitesses par rapport au sol de l'hélicoptère selon les axes OX, OY, OZ,

Vsn, Vse, Vsv      étant les vitesses par rapport au sol de l'hélicoptère selon les axes Nord, Est, Vertical du repère terrestre,

Vax, Vay, Vaz      étant les vitesses par rapport à l'air de l'hélicoptère selon les axes OX, OY, OZ

Van, Vae, Vav      étant les vitesses par rapport à l'air de l'hélicoptère selon les axes Nord, Est, Vertical du repère terrestre,

les équations de passage du repère hélicoptère au repère terrestre s'écrivent :

$$Vsn = p11\ Vsx + p12\ Vsy + p13\ Vsz \qquad (15)$$
$$Vse = p21\ Vsx + p22\ Vsy + p23\ Vsz \qquad (16)$$
$$Vsv = p31\ Vsx + p32\ Vsy + p33\ Vsz \qquad (17)$$
$$Van = p11\ Vax + p12\ Vay + P13\ Vaz \qquad (18)$$
$$Vae = p21\ Vax + p22\ Vay + p23\ Vaz \qquad (19)$$
$$Vav = p31\ Vax + p32\ Vay + p33\ Vaz \qquad (20)$$

avec :

p11 = cos $\psi$ cos$\theta$  p12 = -sin $\psi$ cos $\phi$ + cos $\psi$ sin$\theta$sin$\psi$  p13 = sin $\psi$ sin $\psi$ +cos $\psi$ sin$\theta$cos$\psi$
p21 = sin $\psi$ cos$\theta$  p22 = cos $\psi$ cos $\psi$ + sin $\psi$ sin$\theta$sin$\psi$  p23 = sin $\psi$ sin$\theta$cos$\psi$ -cos $\psi$ sin$\psi$
p31 =-sin$\theta$  p22 = cos$\theta$sin$\psi$  p33 = cos$\theta$ cos$\psi$

$\psi$, $\theta$, $\psi$ étant respectivement le cap, l'assiette longitudinale, ou l'angle de tangage, et l'angle de roulis fournis par la référence embarquée.

Des équations (17) et (20), on déduit :

$$Vsz = \frac{1}{p13} (Vsv - p31\ Vsx - p32\ Vsy) \qquad (21)$$

$$Vaz = \frac{1}{p13} (Vav - p31\ Vax - p32\ Vay) \qquad (22)$$

Des équations (15), (16), (18), (19), (21), (22), on déduit :

Vsn = q11 Vsx + q12 Vsy + q13 Vsv    (23)
Vse = q21 Vsx + q22 Vsy + q23 Vsv    (24)
Van = q11 Vax + q12 Vay + q13 Vav    (25)
Vae = q21 Vax + q22 Vay + q23 Vav    (26)

aveo :

$$\begin{cases} q11 = p11 - \dfrac{p13}{p33}\ p31 \\[2ex] q12 = p12 - \dfrac{p13}{p33}\ p32 \\[2ex] q22 = p22 - \dfrac{p23}{p33}\ p32 \\[2ex] q21 = p21 - \dfrac{p23}{p33}\ p31 \\[2ex] q13 = \dfrac{p13}{p33} \qquad q23 = \dfrac{p23}{p33} \end{cases}$$

La vitesse de l'hélicoptère par rapport au sol s'exprime comme la somme de la vitesse de l'hélicoptère par rapport à l'air et de la vitesse du vent Vv.

Vsn = Van + Vvn    (27)
Vse = Vee + Vve    (28)
Vsv = Vav + Vvv    (29)

En remplaçant, dans les équations (27) et (28), Vsn, Van, Vse et Vae par leurs valeurs fournies par les équations (23), (24), (25) et (26) on obtient :

q11 Vsx + q12 Vsy + q13 Vsv = q11 Vax + q12 Vay + q13 Vav + Vvn    (29)

q21 Vsx + q22 Vsy + q23 Vsv = q21 Vax + q22 Vay + q23 Vav + Vve    (30)

Lorsque la composante du vent est nulle, on peut simplifier les équations (29) et (30) :

q11 Vsx + q12 Vsy - q11 Vax + q12 Vay + Vvn    (31)
q21 Vsx + q22 Vsy = q21 Vax + q22 Vay + Vve    (32)

Si on écrit les équations (31) et (32) pour deux points de vol suffisamment proches dans le temps pour que le vent soit constant entre ces deux points, on obtient, par soustraction membre à membre de l'équation 31, respectivement 32, écrite pour le point de vol (1), de l'équation 31, respectivement 32, écrite pour le point de vol (2)

q11 (1) Vsx (1) = q11 (2) Vsx (2) + q12 (1) Vsy (1) - q12 (2) Vsy (2) =
q11 (1) Vax (1) -q11 (2) Vax (2)+ q12 (1) Vay (1) - q12 (2) Vay (2)    (33)

q21 (1) Vsx (1) - q21 (2)Vsx (2) + q22 (1) Vsy (1) - q22 (2) Vsy (2) =
q21 (1) Vax (1) - q21 (2) Vax (2) + q22 (1) Vay (1) - q22 (2) Vay (2)    (34)

les symboles (1) et (2) exprimant que le paramètre est mesuré dans une première condition de vol et une deuxième condition de vol, respectivement.

Ayant exprimé les équations (13) et (14) sous la forme simplifiée suivante :

Vax = $\Sigma$ kj $\lambda$j    (43)
Vay = $\Sigma$ k'j $\mu$ j    (44)

en remplaçant dans (33) et (34) Vax et Vay par leurs valeurs données par les relations (43) et (44) on obtient:

q11 (1) Vsx (1) - q11 (2) Vsx (2) + q12 (1) Vsy (1) -
q12 (2) Vsy (2) =
$\sum_j$ kj (q11 (1) $\lambda$j (1) - q11 (2) $\lambda$j (2)) +$\sum_j$ k'j (q12(1)
$\mu$ j(1)-q12(2) $\mu$ j(2))    (35)

q21 (1) Vsx (1) -q21 (2) Vsx (2) + q22 (1) Vsy (1) -
q22 (2) Vsy (2) =
$\sum_j$ kj (q21 (1) $\lambda$j(1) - q21 (2) $\lambda$j (2)) +$\sum_j$ k'j (q22(1)
$\mu$ j(1)-q22(2) $\mu$ j(2))    (36)

Il faut donc deux fois plus de points de vol que dans l'étalonnage direct et donc au moins 20 points, pour déterminer les 2 fois 10 inconnues que sont les coefficients k et k'. C'est dans ce sens qu'on peut dire, que dans l'auto-étalonnage on dédouble chaque configuration de vol de l'étalonnage direct. La résolution se fait par une méthode de résolution d'équations linéaires au sens des moindres carrés, comme dans le cas de l'étalonnage direct.

Cette procédure de calibration est effectuée par l'unité de traitement qui est utilisée pour élaborer les deux vitesses air. Un mode spécial est prévu, dans cette unité, qui permet de déclencher cette procédure et de la réaliser pendant le vol en temps réel.

L'ensemble des coefficients k et k' est alors mémorisé dans le dispositif et l'élaboration des deux vitesses se fait alors de manière continue, comme dans la procédure classique.

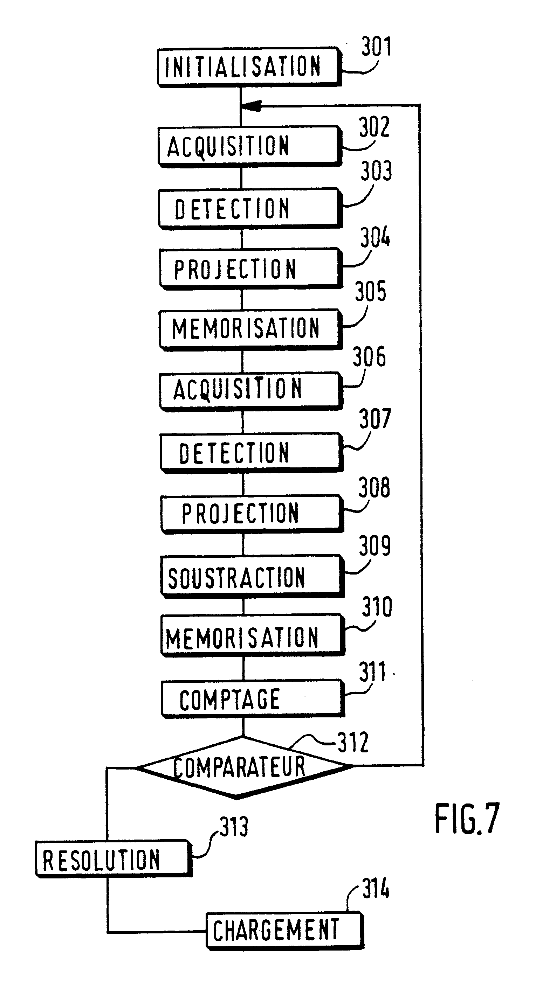

L'organigramme de calcul est présenté sur la figure 7. Un dispositif d'initialisation 301 est commandé avant le vol d'auto-étalonnage, soit par le pilote, soit par un insert de programmation sur le calculateur. Le pilote effectue le vol qui l'amène à différentes valeurs de vitesse air.

Le calculateur acquiert à l'aide d'une procédure d'acquisition 302, identique à la procédure du procédé classique, les paramètres mesurés sur l'hélicoptère ($\theta$x, Px, Pz, Po, $\gamma$z, Py, $\theta$y), les valeurs des vitesses de référence par rapport au sol et les valeurs d'attitude et de cap vrais de l'hélicoptère. Puis, le calculateur s'assure à l'aide d'un dispositif de détection classique d'écart 303 que le jeu de paramètres ainsi acquis est suffisamment différent des précédents. Le jeu considéré est alors mémorisé par une procédure classique 305, après projection, c'est-à-dire calcul des coefficients des équations (33) et (34) par une procédure 304.

Le calculateur acquiert alors à l'aide d'une procédure d'acquisition 306, qui peut être la même que la procédure 302, un nouveau jeu de valeurs des mêmes coefficients que précédemment, s'assure par une procédure de détection d'écart 307, qui peut être la même que la procédure 303 que le jeu de paramètres ainsi acquis est suffisamment différent des précédents. Le jeu est alors projeté par une procédure 308 qui peut être la même que la procédure 304.

Le calculateur soustrait alors à l'aide d'une procédure simple 309 les valeurs des paramètres ainsi trouvés de ceux acquis juste auparavant, puis mémorise le résultat à l'aide d'une procédure 310.

Il incrémente alors un dispositif de comptage 311. Si la valeur de ce compteur est inférieure à une valeur N donnée au départ (nécessairement supérieure à 20) dans un comparateur 312, le calculateur continue à acquérir des paramètres. Sinon, le calculateur effectue la résolution des 2 x N équations à 2 fois 10 inconnues que sont les paramètres $k_1$ - $k_{10}$ et $k'_1$ - $k'_{10}$, à l'aide d'une procédure classique 313 de résolution d'équations linéaires au sens des moindres carrés. Cette résolution étant faite, les jeux de coefficients $k_1$ - $k_{10}$ et $k'_1$ - $k'_{10}$ sont chargés dans les mémoires 50 et 150 à l'aide d'une procédure classique de chargement 314.

D'autres jeux de coefficients peuvent être calculés et mémorisés de la même façon pour d'autres configurations de vol ou de chargement externe.

A titre d'exemple, le jeu de paramètres suivant a été déterminé sur un hélicoptère.

$k_1$ = 4,71 m/s/deg

$k'_1$ = 1,06 m/s/deg

$k_2$ = 0,42 m/s/deg

$k'_2$ = 3,22 m/s/deg

$k_3$ = 14,95 m/s/deg

$k'_3$ = 5,03 m/s/deg

$k_4$ = 0,65 m/s/deg

$k'_4$ = 0,55 m/s/deg

$k_5$ = 0,26 m/s/deg

$k'_5$ = 0,44 m/s/deg

$k_6$ = 0,60 m/s/deg$^2$

$k'_6$ = 0,24 m/s/deg$^2$

$k_7$ = 0,13 m/s/deg$^2$

$k'_7$ = 0,03 m/s/deg$^2$

$k_8$ = 0,02 m/s/deg$^2$

$k'_8$ = 0,21 m/s/deg$^2$

$k_9$ = 1,87 s

$k'_9$ = 0,03 m/s/deg

$k_{10}$ = 4,71 m/s/deg

$k'_{10}$ = 20,94 m/s

La planche 8 représente un exemple de réalisation d'un dispositif complet de l'invention.

On trouve en entrée du dispositif et pour les axes OX et OY, respectivement en 411 et 412, les paramètres d'influence tels que :

- les pas rotor, fournis par des capteurs potentiométriques,
- la commande du dispositif anti-couple,
- la masse de l'hélicoptère, fournie par le constructeur et la charge, y compris le poids de carburant,
- la densité de l'air (421), fournie par des capteurs de pression statique et de température,
- les vitesses de roulis et de tangage fournies par des gyromètres (415, 416 et 417, 418),
- la vitesse de rotation du rotor principal fournie par un tachymètre (422, 423),

ainsi que la vitesse verticale Vz, provenant, par exemple, d'un variomètre 413 et l'accélération verticale $\gamma$z, provenant d'un accéléromètre 414.

Le calcul de Vx et Vy se fait respectivement par les dispositifs 401 et 402 tels que décrits précédemment, à partir des paramètres d'influence précédents et du (ou des) jeux de coefficients mémorisés en 403.

Ces jeux de coefficients 403 proviennent de l'autocalibrateur 404 déjà décrit en référence à la figure 7 et géré par le calculateur 405.

Cet autocalibrateur 404 reçoit les paramètres d'influence ainsi que les informations de vecteur vitesse sol fournies par exemple par une centrale inertielle 406 ou un système classique à radar doppler et centrale de verticale pour les altitudes.

Il reçoit également les informations de sortie des dispositifs de calcul de Vx et Vy, ce qui donne la possibilité d'un autocalibration permanente au cours du vol.

Un dispositif d'hybridation 408 reçoit essentiellement les informations Vx, et éventuellement Vy, ainsi que la vitesse air V fournie par un anémomètre classique 409 qui n'est précis que pour les vitesses élevées par exemple supérieures à 40 noeuds. Ce dispositif 408, en fonction de la vitesse de vol réelle, effectue le choix de la vitesse Vx à fournir:
- soit Vx telle que calculée par le dispositif 401,
- soit Vx tel que calculé par l'anémomètre 409, qui tient compte de la température,
- soit une moyenne pondérée de ces deux valeurs.

Le calculateur 405 surveille et gère toutes les opérations décrites et fournit de façon classique une information de validité des informations calculées et de l'état du système.

Le dispositif décrit ci-dessus permet d'obtenir des mesures précises et complètes de la vitesse air d'un hélicoptère dans tout son domaine de vol et est étalonnable par les seuls moyens internes de l'hélicoptère. Le jeu de coefficients particuliers utilisés est optimisé pour tout le domaine de vol de l'hélicoptère. Comme indiqué, on peut également mettre en mémoires plusieurs jeux de tels coefficients et les utiliser soit successivement, si chaque jeu correspond à une partie seulement du domaine de vol, soit tous pour tout le domaine de vol, chaque jeu de coefficients correspondant alors à une configuration donnée des charges externes de l'hélicoptère.

Tout au long de la description ci-dessus, il a été considéré que l'axe OZ du moyeu du rotor principal était perpendiculaire aux axes, OX, OY. Il est clair qu'il n'en est pas toujours ainsi, même si c'est souvent le cas, le moyeu du rotor pouvant être "calé" par rapport à la droite orthogonale aux axes OX, OY. On ne sortirait d'ailleurs pas pour autant du cadre de la présente invention.

**Revendications**

1. Procédé de détermination de la vitesse air d'un hélicoptère comprenant un rotor principal de sustentation et un dispositif anticouple, avec un axe longitudinal OX, un axe transversal OY et un axe du moyeu du rotor OZ, un plateau cyclique étant prévu pour faire varier le pas cyclique longitudinal Px, le pas cyclique transversal Py et le pas collectif Po du rotor principal, procédé dans lequel on détermine les deux composantes Vx et Vy de cette vitesse le long des axes OX et OY, respectivement, en fonction de la différence entre le pas cyclique (Px, Py) selon l'axe considéré (OX, OY) et l'angle d'inclinaison ($\theta$x, $\theta$y) de l'hélicoptère autour de l'autre axe (OY, OX) procédé caractérisé par le fait qu'on détermine Vx et Vy en résolvant les équations :

$$Vx = k_1 (P_x - \theta_x) + k_7 P_x^2 + k_8 P_x P_z + k_4 P_y + k_5 \theta_y + k_2 P_z + k_9 \gamma z + k_3 P_0 + k_6 P_0^2 + k_{10}$$

$$Vy = k'_1 (Py - \theta_y) + k'_7 P_x^2 + k'_8 P_0 P_z + k'_4 P_x + k'_5 \theta_x + k'_2 P_z + k'_9 P_x \theta_y + k'_3 P_0 + k'_6 P_0^2 + k'_{10}$$

dans lesquelles
- $P_z$ est le pas du dispositif anticouple,
- $\gamma_z$ est l'accélération verticale de l'hélicoptère suivant l'axe OZ,
- $k_1 - k_{10}$ et $k'_1 - k'_{10}$ sont des paramètres, fixes ou variables, dépendant du type de l'hélicoptère et déterminés par étalonnage.

2. Procédé selon la revendication 1, dans lequel les paramètres $k_1$ et $k'_1$ sont donnés par les relations :

$$k_1 = \frac{\Omega R}{\frac{4}{3} P_0 + \frac{8\omega}{5,7} + \frac{Cd}{\omega}}$$

$$k'_1 = \frac{-1}{\frac{4}{3} P_0 + \frac{8\omega}{5,7} + \frac{Cd}{\omega}}$$

dans lesquelles

- . $\Omega$ est la vitesse de rotation du rotor principal,
- . R est le rayon du rotor principal,
- . $\omega$ est le poids W de l'hélicoptère selon la verticale, réduit par le terme $\rho nc \, \Omega^2 R^3$,
- . Cd est la trainée moyenne des pales,
- . $\rho$ est la densité de l'air au lieu où se trouve l'hélicoptère,
- . n est le nombre de pales du rotor principal,
- . c est la corde des pales du rotor principal, l'axe OZ du moyeu du rotor principal étant perpendiculaire aux axes OX,OY.

3. Procédé selon la revendication 2, dans lequel on considère comme nuls les paramètres $k_2$-$k_{10}$ et $k'_2$-$k'_9$ et on prend $k'_{10}$ comme donné par la relation

$$k'_{10} = \frac{k \ tr \ cos \ \psi \ - \ sin \ \Theta Y}{\frac{4}{3} \ Po \ + \ \frac{8 \omega}{5,7} \ + \ \frac{Cd}{\omega}}$$

dans laquelle

- . k est une constante dépendant du type de l'hélicoptère,
- . tr est la poussée réduite du dispositif anticouple, réduite par le terme $\rho nc\Omega^2 R^3$,
- . $\psi$ est l'angle de roulis de l'hélicoptère.

4. Procédé selon la revendication 1, dans lequel on considère les paramètres $k_1$-$k_{10}$ et $k'_1$-$k'_{10}$ comme des constantes.

5. Système pour la mise en oeuvre du procédé de l'une des revendications 1 à 4, pour la détermination de la vitesse air d'un hélicoptère comprenant un rotor principal de sustentation et un dispositif anticouple, avec un axe longitudinal OX, un axe transversal OY et un axe du moyeu du rotor OZ, un plateau cyclique étant prévu pour faire varier le pas cyclique longitudinal Px, le pas cyclique transversal Py et le pas collectif Po du rotor principal, système caractérisé par le fait qu'il comprend un accéléromètre (414) fournissant l'accélération vertical $\gamma z$, suivant l'axe OZ, de l'hélicoptère, des inclinomètres (411, 412) fournissant les angles d'inclinaison $\theta x$ et $\theta y$ de l'hélicoptère autour des axes OY et OX, respectivement, des capteurs (411, 412) de déplacement de la commande des pas cycliques longitudinal Px et transversal Py, un capteur (411, 412) de déplacement de la commande du dispositif anticouple Pz, un capteur (411, 412) de déplacement de la commande de pas collectif Po du rotor principal, un dispositif (404) d'étalonnage du système agencé pour déterminer les coefficients $k_1$-$k_{10}$ et $k'_1$-$k'_{10}$ des relations fournissant les valeurs des composantes longitudinale Vx et transversale Vy de la vitesse air de l'hélicoptère, des moyens (50, 150) pour mémoriser ces coefficients, et un calculateur (405, 401, 402) agencé pour acquérir les paramètres $\gamma z$, $\theta x$, $\theta y$, Px, Py, Pz et Po et, à l'aide desdits coefficients, mettre en oeuvre lesdites relations fournissant $V_x$ et $V_y$.

6. Système selon la revendication 5, dans lequel est prévu un variomètre (413) fournissant la vitesse verticale $V_z$ de l'hélicoptère et un dispositif (406) de détermination de la vitesse sol de l'hélicoptère.

7. Système selon la revendication 6, dans lequel sont prévus un anémomètre classique (409) et un dispositif d'hybridation (408) agencé pour sélectionner l'une, ou l'autre, ou une combinaison des deux valeurs de la vitesse air fournies par le calculateur (401-405) et l'anémomètre (409), respectivement.

8. Système selon l'une des revendications 5 à 7, dans lequel sont prévus des capteurs des vitesses de roulis (415, 416) et de tangage (417, 418) de l'hélicoptère, de la densité de l'air (421) et de la vitesse de rotation du rotor principal de l'hélicoptère (422, 423).

9. Procédé d'étalonnage d'un système de détermination de la vitesse air V d'un hélicoptère de la forme linéaire

$$V = \sum_{i=1}^{i=n} a_i \, x_i \; ,$$

les $x_i$ étant n variables, représentatives de différents paramètres sensibilisants de l'hélicoptère, affectées respectivement des n coefficients multiplicateurs $a_i$, procédé dans lequel on détermine les n coefficients $a_i$ en résolvant un système de N équations linéaires à N inconnues de la forme

$$V = \sum_{i=1}^{n} a_i x_i \; ,$$

N étant le nombre de configurations principales de vol de l'hélicoptère dans lesquelles on mesure lesdits paramètres sensibilisants de l'hélicoptère dans le repère de l'hélicoptère et on calcule les valeurs des n dites variables $x_i$, procédé d'étalonnage caractérisé par le fait qu'on détermine l'attitude et le cap vrais de l'hélicoptère, on dédouble chaque configuration de vol principales en une paire de deux configurations élémentaires voisines l'une de l'autre pour admettre que le vent est le même dans ces deux configurations élémentaires, et pour chaque paire de configurations élémentaires, on mesure, dans les deux configurations élémentaires, la vitesse sol de l'hélicoptère, dont les variations sont assimilées à celles de sa vitesse air, ainsi que les paramètres sensibilisants de l'hélicoptère, qu'on transpose du repère de l'hélicoptère dans le repère terrestre, et on prend pour équation du système de N équations à résoudre celle obtenue par soustraction membre à membre des deux équations relatives aux deux configurations élémentaires.

10. Procédé d'étalonnage selon la revendication 9, dans lequel la résolution du système de N équations à n inconnues s'effectue par la méthode des moindres carrés.

## Claims

1. Method for determining the air speed of a helicopter comprising a main lift rotor and an anti-torque device, with a longitudinal axis OX, a transverse axis OY and an axis of the rotor hub OZ, a cyclic plate being provided for varying the longitudinal cyclic pitch Px, the transverse cyclic pitch Py and the collective pitch Po of the main rotor, a method in which one determines the two components Vx and Vy of this speed along the axes OX and OY, respectively, as a function of the difference between the cyclic pitch (Px, Py) along the axis in question (OX, OY) and the angle of inclination ($\theta x$, $\theta y$) of the helicopter about the other axis (OY, OX), a method characterised by the fact that one determines Vx and Vy by resolving the equations:

$$Vx = k_1 (P_x\text{-}\theta_x) + k_7 P_x^2 + k_8 \, P_x P_z + k_4 P_y + k_5 \theta_y + k_2 P_z + k_9 \gamma_z + k_3 P_0 + k_6 P_0^2 + k_{10}$$

$$Vy = k'_1 (Py\text{-}O_y) + k'_7 P_x^2 + k'_8 P_0 P_z + k'_4 p_x + k'_5 \theta_x + k'_2 P_z + k'_9 P_x \theta_y + k'_3 P_0 + k'_6 P_0^2 + k'_{10}$$

in which

   . $P_z$ is the pitch of the anti-torque device,
   . $\gamma_z$ is the vertical acceleration of the helicopter along the axis OZ,
   . $k_1$-$k_{10}$ and $k'_1$-$k'_{10}$ are fixed or variable parameters depending on the type of helicopter and determined by calibration.

2. Method according to Claim 1, in which the parameter $k_1$ and $k'_1$ are given by the relationships:

$$k_1 = \cfrac{\Omega R}{\cfrac{4}{3} Po + \cfrac{8\omega}{5,7} + \cfrac{Cd}{\omega}}$$

$$k'_1 = \cfrac{-1}{\cfrac{4}{3} Po + \cfrac{8\omega}{5,7} + \cfrac{Cd}{\omega}}$$

in which

. $\Omega$ is the speed of rotation of the main rotor,

. R is the radius of the main rotor,

. $\omega$ is the weight W of the helicopter along the vertical, reduced by the term $\rho$ nc $\Omega^2 R^3$,

. Cd is the average drag of the blades,

. $\rho$ is the density of the air at the place where the helicopter is located,

. n is the number of blades of the main rotor,

. c is the chord of the blades of the main rotor, the axis OZ of the hub of the main rotor being perpendicular to the axes OX, OY.

3. Method according to Claim 2, in which one considers as zero the parameters $k_2$ -$k_{10}$ and $k'_2$ -$k'_9$ and one takes $k'_{10}$ as given by the relationship

$$k'_{10} = \cfrac{k\ tr\ \cos \varphi - \sin \theta Y}{\cfrac{4}{3} Po + \cfrac{8\omega}{5,7} + \cfrac{Cd}{\omega}}$$

in which

. k is a constant dependent on the type of helicopter,

. tr is the reduced thrust of the anti-torque device, reduced by the term $\rho$ nc $\Omega^2 R^3$,

. $\psi$ is the angle of roll of the helicopter.

4. Method according to Claim 1, in which one considers the parameters $k_1$-$k_{10}$ and $k'_1$-$k'_{10}$ as constants.

5. System for carrying out the method of one of Claims 1 to 4, for determining the air speed of a helicopter comprising a main lift rotor and an anti-torque device, with a longitudinal axis OX, a transverse axis OY and an axis of the rotor hub OZ, a cyclic plate being provided for varying the longitudinal cyclic pitch Px, the transverse cyclic pitch Py and the collective pitch Po of the main rotor, the system being characterised by the fact that it comprises an accelerometer (414) providing the vertical acceleration $\gamma z$, on the axis OZ, of the helicopter, inclinometers (411, 412) providing the angles of inclination $\theta x$ and $\theta y$ of the helicopter about the axes OY and OX, respectively, sensors (411,412) for sensing the movement of the control of the longitudinal cyclic pitch Px and transverse cyclic pitch Py, a sensor (411,412) for sensing the movement of the control of the anti-torque device Pz, a sensor (411,412) for sensing the movement of the control of the collective pitch Po of the main rotor, a device (404) for calibration of the system provided for determining the coefficients $k_1$-$k_{10}$ and $k'_1$-$k'_{10}$ of the relationships providing the values of the longitudinal component Vx and transverse component Vy of the air speed of the helicopter, means (50, 150) for memorising these coefficients, and a calculator (405, 401, 402) arranged in order to acquire the parameters $\gamma z$, $\theta x$, $\theta y$, Px, Py, Pz and Po and, by means of said coefficients, for using said relationships supplying $V_x$ and $V_y$.

6. System according to Claim 5, in which a variometer (413) is provided supplying the vertical speed $V_z$ of the helicopter and a device (406) for determining the ground speed of the helicopter.

7. System according to Claim 6, in which a conventional anemometer (409) is provided and a hybridisation device (408) arranged to select one, or the other, or a combination of the two values of the air speed supplied by the calculator (401-405) and the anemometer (409), respectively.

8. System according to one of Claims 5 to 7, in which sensors are provided for sensing the rolling speed (415,416) and pitching speed (417,418) of the helicopter, the air density (421) and the speed of rotation of the main rotor of the helicopter (422, 423).

9. Method for calibrating a system for determining the air speed V of a helicopter of the linear form

$$V = \sum_{i=1}^{i=n} a_i x_i \, ,$$

the $x_i$ being n variables, representing various sensitising parameters of the helicopter, affected respectively by the n multiplying coefficient $a_i$, a method in which the n coefficients $a_i$ are determined by resolving a system of N linear equations with N unknowns of the form

$$V = \sum_{i=1}^{n} a_i x_i ,$$

N being the number of main flying configurations of the helicopter in which one measures said sensitising parameters of the helicopter in the reference system of the helicopter and one calculates the values of the said n variables $x_i$, a calibration method characterised by the fact that one determines the true attitude and course of the helicopter, one divides into two each main flying configuration into a pair of two basic configurations close to each other in order to acknowledge that the wind is the same in these two basic configurations, and for each pair of basic configurations, one measures, in the two basic configurations, the ground speed of the helicopter, whereof the variations are considered identical to those of its air speed, as well as the sensitising parameters of the helicopter, that one transposes from the reference system of the helicopter into the earth reference and one takes for an equation, from the system of N equations to be resolved, that obtained by subtraction side by side from the two equations relating to the two basic configurations.

10. Calibrating method according to Claim 9, in which the resolution of the system of N equations with N unknowns takes place by the method of least squares.

**Patentansprüche**

1. Verfahren zur Ermittlung der Luftgeschwindigkeit eines Hubschraubers umfassend einen Hauptrotor für den Auftrieb, eine Einrichtung zum Drehmomentausgleich, mit einer Längsachse OX, einer Querachse OY und einer Rotorachse OZ, und eine Taumelscheibe, die dazu vorgesehen ist, die zyklische Längsteilung Px, die zyklische Querteilung Py und die kollektive Teilung Po des Hauptrotors zu verändern, in-dem die beiden Komponenten Vx und Vy dieser Geschwindigkeit längs der Achsen OX und OY jeweils gemäß der Differenz zwischen der zyklischen Teilung (Px, Py) längs der besagten Achsen (OX, OY) und dem Neigungswinkel ($\theta x$, $\theta y$) des Hubschraubers um die andere Achse (OY, OX) bestimmt werden, dadurch gekennzeichnet, daß Vx und Vy durch die Lösung folgender Gleichungen bestimmt werden:

$$Vx = k_1(P_x\text{-}\theta_x) + k_7 P_x^2 + k_8 P_x P_z + k_4 P_y + k_5 \theta_y + k_2 P_z + k_9 \gamma_z + k_3 P_0 + k_6 P_0^2 + k_{10}$$

$$Vy = k'_1 (P_y\text{-}\theta_y) + k'_7 P_x^2 + k'_8 P_0 P_z + k'_4 P_x + k'_5 \theta_x + k'_2 P_z + k'_9 P_x \theta_y + k'_3 P_0 + k'_6 P_0^2 + k'_{10}$$

in denen

. $P_z$ die Teilung der Einrichtung zum Drehmomentausgleich ist,
. $\gamma_z$ die vertikale Beschleunigung des Hubschraubers längs der Achse OZ ist,
. $k_1$-$k_{10}$ und $k'_1$-$k'_{10}$ konstante oder variable Parameter sind, die von der Type des Hubschraubers abhängig sind und durch Kalibrierung bestimmt werden.

2. Verfahren nach Anspruch 1, bei welchem die Parameter $k_1$ und $k'_1$ durch folgende Beziehungen gegeben sind:

$$k_1 = \frac{\Omega R}{\frac{4}{3} P_o + \frac{8\omega}{5,7} + \frac{Cd}{\omega}}$$

$$k'_1 = \frac{-1}{\frac{4}{3} P_o + \frac{8\omega}{5,7} + \frac{Cd}{\omega}}$$

in denen

. $\Omega$ die Rotationsgeschwindigkeit des Hauptrotors ist,
. $R$ der Radius des Hauptrotors ist,
. $\omega$ das um den Term $\rho n c \Omega^2 R^3$ reduzierte Gewicht des Hubschraubers entlang der Senkrechten ist,
. $Cd$ der mittlere Widerstand der Rotorblätter ist,
. $\rho$ die Dichte der Luft an der Stelle, an der sich der Hubschrauber befindet, ist,
. $n$ die Anzahl der Hauptrotorblätter ist,
. $c$ die Flügeltiefe der Blätter des Hauptrotors ist, wobei die Hauptrotorachse OZ im rechten Winkel auf die Achsen OX, OY steht.

3. Verfahren nach Anspruch 2, bei welchem die Parameter $k_2$-$k_{10}$ und $k'_2$-$k'_9$ als Nullwerte betrachtet werden und $k'_{10}$ durch die folgende Beziehung gegeben ist:

$$k'_{10} = \frac{k \, tr \cos \psi - \sin \theta Y}{\frac{4}{3} P_o + \frac{8\omega}{5,7} + \frac{Cd}{\omega}}$$

in der

. $k$ eine von der Type des Hubschraubers abhängige Konstante ist,
. $tr$ die um den Term $\rho n c \Omega^2 R^3$ reduzierte Schubkraft der Einrichtung zum Drehmomentausgleich ist,
. $\psi$ der Rollwinkel des Hubschraubers ist.

4. Verfahren nach Anspruch 1, bei welchem die Parameter $k_1$-$k_{10}$ und $k'_1$-$k'_{10}$ als Konstante angenommen werden.

5. System zur Durchführung des Verfah nach einem der Ansprüche 1 bis 4 zur Bestimmung der Luftgeschwindigkeit eines Hubschraubers, umfassend einen Hauptrotor für den Auftrieb, eine Einrichtung zum Drehmomentausgleich, mit einer Längsachse OX, einer Querachse OY und einer Rotorachse OZ, und eine Taumelscheibe, die dazu bestimmt ist, die zyklischen Längsteilung Px, die zyklischen Querteilung Py und die kollektive Teilung Po des Hauptrotors zu verändern, dadurch gekennzeichnet, daß es einen Beschleunigungsmesser (414), der die senkrechte Beschleunigung $\gamma z$ längs der Achse OZ des Hubschraubers angibt, Neigungswinkelmesser (411, 412), die jeweils die Neigungswinkel $\theta x$ und $\theta y$ des Hubschraubers um die Achsen OY und OX angeben, Aufnehmer (411, 412) zum Aufnehmen der Verschiebung der Steuerung der Zyklischen Längsteilung Px und der zyklischen

21

Querteilung Py, Aufnehmer (411,412) zum Aufnehmen der Verschiebung der Steuerung der Einrichtung zum Drehmomentausgleich Pz, Aufnehmer (411,412) zum Aufnehmen der Verschiebung der Steuerung der kollektiven Teilung Po des Hauptrotors, eine Einrichtung (404) zur Kalibrierung des oben beschriebenen Systems zur Bestimmung der Koeffizienten $k_1$-$k_{10}$ und $k'_1$-$k'_{10}$ der Beziehungen, die die Komponenten der Längsachse Vx und der Querachse Vy der Luftgeschwindigkeit des Hubschraubers angeben, Mittel (50, 150) zur Speicherung dieser Koeffizienten und einen Rechner (405, 401, 402) umfaßt, der die Parameter $\gamma$ z, $\theta$x, $\theta$y, Px, Py, Pz und Po erstellt und mittels besagter Koeffizienten die Beziehungen ausführt, die Vx und Vy angeben.

6. System nach Anspruch 5, bei welchem ein Variometer (413), das die senkrechte Geschwindigkeit Vz des Hubschraubers angibt, und eine Einrichtung (406) zur Bestimmung der Grundgeschwindigkeit des Hubschraubers vorgesehen sind.

7. System nach Anspruch 6, bei welchem ein klassisches Anämometer (409) und eine Hybridisierungseinrichtung (408) vorgesehen sind, die dazu angeordnet sind, den einen oder den anderen oder eine Kombination der beiden Werte der Luftgeschwindigkeit auszuwählen, die vom Rechner (401-405) beziehungsweise vom Anämometer (409) angegeben werden.

8. System nach einem der Ansprüche 5 bis 7, in dem Aufnehmer zum Aufnehmen der Roll (415,416) - und Kippgeschwindigkeit (417,418) des Hubschraubers sowie der Dichte der Luft (421) und der Rotationsgeschwindigkeit des Hauptrotors des Hubschraubers (422,423) vorgesehen sind.

9. Verfahren zur Kalibrierung eines Systems zur Bestimmung der Luftgeschwindigkeit V eines Hubschraubers in der linearen Form

$$V = \sum_{i=1}^{i=n} a_i x_i \, ,$$

wobei $x_i$ n Variable sind, stellvertretend für verschiedene charakteristische Parameter des Hubschraubers, die jeweils mit n multiplikativen Faktoren $a_i$ versehen werden, wobei die n Koeffizienten $a_i$ bestimmt werden, indem ein System von N linearen Gleichungen mit N Unbekannten in der Form

$$V = \sum_{i=1}^{n} a_i x_i \, ,$$

gelöst wird, wobei N die Anzahl der Grundzustände des Fluges des Hubschraubers sind, in denen man die besagten charakteristischen Parameter des Hubschraubers in dem Referenzsystem des Hubschraubers mißt und den Wert der n besagten Variablen $x_i$ errechnet, dadurch gekennzeichnet, daß man die Lage und den wahren Steuerkurs des Hubschraubers bestimmt, indem man jeden Grundzustand des Fluges auf ein Paar von zwei aneinander angrenzenden Grundzuständen aufteilt, um zu gewährleisten, daß der Wind in den beiden elementaren Konfigurationen der gleiche ist, und man für jedes Paar der Grundzustände in den beiden Grundzuständen die Grundgeschwindigkeit des Hubschraubers mißt, deren Abweichungen an jene seiner Luftgeschwindigkeit angeglichen werden, wie auch die charakteristischen Parameter des Hubschraubers, die man vom Referenzsystem des Hubschraubers in den Referenzsystem der Erde überträgt, und daß man als Gleichung des Systems von N zu lösenden Gleichungen jene nimmt, die man Subtraktion Term für Term der beiden Gleichungen erhält, die sich auf die Grundzustände beziehen.

10. Verfahren zur Kalibrierung nach Anspruch 9, bei welchem die Lösung des Systems von N Gleichungen mit N Unbekannten durch die Methode der kleinsten Quadrate vorgenommen wird.

FIG.1

FIG. 2

FIG.9

FIG.3

EP 0 283 626 B1

FIG.4

FIG.5

FIG.6

INITIALISATION — 301

ACQUISITION — 302

DETECTION — 303

PROJECTION — 304

MEMORISATION — 305

ACQUISITION — 306

DETECTION — 307

PROJECTION — 308

SOUSTRACTION — 309

MEMORISATION — 310

COMPTAGE — 311

COMPARATEUR — 312

RESOLUTION — 313

CHARGEMENT — 314

FIG.7

FIG. 8